# EUROPÄISCHE PATENTSCHRIFT

(11) **EP 0 608 804 B1**
(45) Veröffentlichungstag und Bekanntmachung des Hinweises auf die Patenterteilung: **03.12.1997**
(21) Anmeldenummer: 94100962.3
(22) Anmeldetag: 24.01.1994
(51) Int. Cl.: A47J 31/40, A47J 31/42

(54) **Automatische Kaffeemaschine**
Automatic coffee machine
Cafetière automatique

(30) Priorität: 27.01.1993 IT MI930130
(43) Veröffentlichungstag der Anmeldung: 03.08.1994
(73) Patentinhaber: CIMBALI S.p.A., I-20082 Binasco (MI) (IT)
(72) Erfinder: Locati, Santino, Milano (IT)
(74) Vertreter: Jaumann, Paolo

(56) Entgegenhaltungen:
- EP-A- 0 419 398
- EP-A- 0 443 054
- FR-A- 2 425 220
- GB-A- 2 019 202

## Beschreibung

Die vorliegende Erfindung betrifft eine automatische Kaffeemaschine zur Zubereitung eines Kaffeegetränkes, in der Kaffeebohnen aus einem Ausgabetrichter in der Mahlkammer einer Kaffeemühle zu Kaffeepulver gemahlen werden, das Kaffeepulver dann über eine Einfüllrutsche in eine Aufgußkammer gelangt, wo es von einem Filtrierkolben und einem Aufgußkolben zusammengepreßt wird, und aus welcher das Kaffeegetränk allein oder als Cappuccino zusammen mit Milch ausfließt.

Eine derartige Kaffeemaschine ist beispielsweise aus der GB-A-2 019 202 bekannt. Bei der dort offenbarten Kaffeemaschine bilden der Aufgußkolben und die Einfüllrutsche eine horizontal verschiebbare Baugruppe. In der Ausgangsstellung ist der Aufgußkolben über der Aufgußkammer angeordnet und kann von oben in diese eingeführt werden. In der Endstellung der Baugruppe ist dagegen die Einfüllrutsche über der Aufgußkammer angeordnet, und aus einer Kaffeemühle mit Meß- und Zuführvorrichtung kann über die Einfüllrutsche von oben Kaffeepulver in die Aufgußkammer gefüllt werden.

Die Kaffeemühle ist jedoch stationär in einer vertikalen Position oberhalb der Aufgußkammer befestigt. Während eines Kaffeezubereitungs-Zyklusses muß also nicht nur die Baugruppe horizontal hin und wieder zurück verschoben werden, sondern es müssen darüber hinaus die Meß- und Zuführvorrichtungen der Kaffeemühle betätigt werden. Dazu bedarf es besonderer Betätigungsmechanismen, durch die der Konstruktionsaufwand der bekannten Kaffeemaschine sehr groß und die Kaffeemaschine aufgrund ihres äußerst komplizierten konstruktiven Aufbaus störanfällig ist.

Darüber hinaus ist aus der FR-A-2 425 220 eine automatische Kaffeemaschine der eingangs genannten Art mit einer aufwendigen Mechanik bekannt, die eine Vielzahl einzeln oder gemeinsam horizontal und/oder vertikal verschiebbarer Maschinenelemente aufweist. Sie verfügt über eine horizontal verschiebbare Mahlgut-Baugruppe, die gemahlenes Kaffeepulver an der Austrittsöffnung der Kaffeemühle aufnehmen und eine bestimmte Menge davon in die Aufgußkammer füllen soll. Die Mahlgut-Baugruppe umfaßt eine horizontal verschiebbare Schublade, die Einfüllrutsche und einen Vorratsbehälter für Kaffeepulver. Die Schublade wird beim Verschieben auf dem Hinweg mit Kaffeepulver aus dem Vorratsbehälter gefüllt, das sie auf dem Rückweg über die Einfüllrutsche in die Aufgußkammer füllt. Bei der hier offenbarten Kaffeemaschine werden die Kaffeebohnen in einer herkömmlichen, stationär angeordneten Kaffeemühle auf Vorrat gemahlen und in dem Vorratsbehälter zwischengelagert.

Auch diese Kaffeemühle benötigt dazu besondere Meß- und Zuführvorrichtungen mit den geeigneten Betätigungsmechanismen. Dadurch ergibt sich für diese bekannte Kaffeemaschine ebenfalls ein äußerst komplizierter Aufbau, woraus sich die bereits oben angeführten Nachteile eines großen Konstruktions- und Herstellungsaufwandes und einer hohen Störanfälligkeit ergeben. Durch den Einsatz von auf Vorrat anstatt frisch gemahlenem Kaffeepulver hat das zubereitete Kaffeegetränk zudem häufig nicht den gewünschten vollen, aromatischen Geschmack.

Aus den Nachteilen des Standes der Technik ergibt sich die Aufgabe der Erfindung, den konstruktiven Aufbau von automatischen Kaffeemaschinen dahingehend zu vereinfachen, daß der Aufwand für Konstruktion und Herstellung und die Störanfälligkeit der Kaffeemaschinen entscheidend reduziert werden und daß dennoch nach wie vor eine rasche Zubereitung eines Kaffeegetränkes aus frisch gemahlenen Kaffeebohnen möglich ist.

Diese Aufgabe wird erfindungsgemäß dadurch gelöst, daß bei den Kaffeemaschinen der eingangs genannten Art die Kaffeemühle, deren Mahlkammer und die Einfüllrutsche eine Baugruppe bilden und daß diese Baugruppe zwischen einer Ausgangsstellung, in welcher die Kaffeebohnen aus dem Ausgabetrichter in die Mahlkammer gelangen, und einer Endstellung, in welcher das Kaffeepulver aus der Mahlkammer über die Einfüllrutsche in die Aufgußkammer gelangt, verschiebbar und zwar vorzugsweise horizontal verschiebbar ist.

Die Mahlkammer wird in der Ausgangsstellung immer vollständig mit Kaffeebohnen aus dem Ausgabetrichter gefüllt. Sobald die Baugruppe in die Endstellung verschoben ist, wird die Kaffeemühle aktiviert, und die Kaffeebohnen werden in der Mahlkammer zu Kaffeepulver gemahlen, das über die Einfüllrutsche in die Aufgußkammer gelangt. Dort wird das Kaffeepulver dann von dem Aufgußkolben und dem Filtrierkolben zusammengepreßt und mit kochendem Wasser durchströmt. Das frisch zubereitete Kaffeegetränk fließt schließlich aus der Aufgußkammer in ein außerhalb dar Kaffeemaschine angeordnetes Trinkgefäß.

Das erfindungsgamäße Zusammenfassen der Kaffeemühle, deren Mahlkammer und der Einfüllrutsche zu einer einzigen Baugruppe hat insbesondere den Vorteil, daß durch einfaches Hin- und Herschieben dieser Baugruppe ein kompletter Kaffeezubereitungs-Zyklus durchlaufen wird. Durch Verschieben der Baugruppe in die Ausgangsstellung wird nicht nur die mit Kaffeepulver gefüllte Aufgußkammer für den Filtrierkolben freigegeben, sondern gleichzeitig auch eine genau definierte Menge Kaffeebohnen aus dem Ausgabetrichter in die Mahlkammer der Kaffeemühle für den nächsten Kaffeezubereitungs-Zyklus gefüllt. Dadurch kann auf zusätzliche Meß- und Zuführvorrichtungen für die Kaffeebohnen verzichtet werden und das gesonderte Betätigen dieser Vorrichtungen während eines jeden Kaffeezubereitungs-Zyklusses kann entfallen.

Insgesamt ergibt sich für die erfindungsgemäße automatische Kaffeemaschine ein besonders einfacher konstruktiver Aufbau, wodurch der Aufwand für Konstruktion und Herstellung und die Störanfälligkeit der Kaffeemaschine erheblich reduziert werden.

In einer vorteilhaften Weiterbildung der Erfindung wird vorgeschlagen, daß die Kaffeemühle in der Endstellung der Baugruppe so lange in Betrieb ist, bis die in der Mahlkammer enthaltenen Kaffeebohnen vollständig gemahlen sind und das Kaffeepulver in die Aufgußkammer gelangt ist. Dies erfolgt beispielsweise dadurch, daß die Kaffeemühle für eine genau programmierte Zeitdauer in Betrieb gesetzt wird. Die Zeitdauer ist dabei so gewählt, daß sie mit Sicherheit ausreicht, die in der Mahlkammer enthaltenen Kaffeebohnen vollständig zu mahlen. D.h. die Menge des pro Kaffeezubereitungs-Zyklus gemahlenen Kaffeepulvers und damit die Stärke des Kaffeegetränkes wird durch den nutzbaren Rauminhalt der Mahlkammer bestimmt.

Weiterhin schlägt die Erfindung vor, daß ein Verschieben der Baugruppe in die Endstellung die Freigabe des Filtrierkolbens bewirkt, der dann bis zu einem unteren Anschlagpunkt fällt. Der Filtrierkolben ist verschiebbar in der Aufgußkammer gelagert. In ausgefahrenem Zustand schließt die Oberfläche des Filtrierkolbens bündig mit dem oberen Rand der Aufgußkammer ab und verschließt diese so nach oben hin. In zurückgefahrenem Zustand wird der Zugang zu der Aufgußkammer freigegeben, wobei die Oberfläche des Filtrierkolbens den Boden der Aufgußkammer bildet. Durch Verschieben der Baugruppe in die Endstellung fällt der Filtrierkolben automatisch bis zum unteren Anschlagpunkt und gibt so die gesamte Aufgußkammer frei, die dann über die Einfüllrutsche mit Kaffeepulver aus der Mahlkammer gefüllt werden kann. Auf eine gesonderte Betätigung des Filtrierkolbens kann somit vorteilhafterweise verzichtet werden.

Das Verschieben der Baugruppe in die Endstellung bewirkt den Auswurf einer Pastille, die aus zusammengepreßtem und ausgelaugtem Kaffeesatz besteht. Wenn die Baugruppe in der Ausgangsstellung ist, liegt die Pastille auf der Oberfläche des ausgefahrenen Filtrierkolbens. Durch Verschieben der Baugruppe in die Endstellung wird die Pastille von einer in Verschieberichtung vorne angeordneten, als Schieber ausgebildeten Außenwand der Einfüllrutsche von der Oberfläche des Filtrierkolbens heruntergeschoben.

Die Stärke des gebrauten Kaffeegetränkes wird durch den nutzbaren Rauminhalt der Mahlkammer bzw. durch die Menge der darin enthaltenen Kaffeebohnen und des daraus gemahlenen Kaffeepulvers bestimmt. Um unterschiedlich starken Kaffee brauen zu können, ist es besonders vorteilhaft, wenn der nutzbare Rauminhalt der Mahlkammer auf einfache Weise verändert werden kann. Dazu schlägt die Erfindung in einer vorteilhaften Weiterbildung vor, daß die Menge der zu mahlenden Kaffeebohnen durch ein in die Mahlkammer einsteckbares Verkleinerungsstück, welches den nutzbaren Rauminhalt der Mahlkammer verkleinert, verringert wird.

Zusammenfassend kann somit gesagt werden, daß die Aufgabe der vorliegenden Erfindung insbesondere durch das Zusammenfassen der Kaffeemühle, deren Mahlkammer und der Einfüllrutsche zu einer einzigen Baugruppe gelöst wird. Durch einfaches Verschieben dieser Baugruppe wird ein vollständiger Kaffeezubereitungs-Zyklus mit den nachfolgend aufgeführten Einzelschritten ausgeführt:
- Auswurf der Pastille aus ausgelaugtem Kaffeesatz des vorangegangen Kaffeezubereitungs-Zyklusses,
- Freigabe des Filtrierkolbens,
- Mahlen der in der Mahlkammer enthaltenen Kaffeebohnen und Füllen der Aufgußkammer mit Kaffeepulver und schließlich
- Füllen der Mahlkammer mit Kaffeebohnen für den nächsten Kaffeezubereitungs-Zyklus.

Ein bevorzugtes Ausführungsbeispiel der Erfindung wird im folgenden anhand der Zeichnungen näher erläutert.

Es zeigen:
- Fig. 1: eine erfindungsgemäße Kaffeemaschine teilweise im Schnitt mit einer aus Kaffeemühle, deren Mahlkammer und Einfüllrutsche bestehenden Baugruppe in Ausgangsstellung;
- Fig. 2: Kaffeemaschine aus Fig. 1 mit der Baugruppe in Endstellung;
- Fig. 3: Kaffeemaschine aus Fig. 1 und 2 während des Füllvorgangs der Aufgußkammer mit Kaffeepulver;
- Fig. 4: Kaffeemaschine aus Fig. 1, 2 und 3 mit der Baugruppe wieder in Ausgangsstellung und
- Fig. 5: Mahlkammer der Kaffeemaschine aus Fig. 1, 2, 3 und 4 im Ausschnitt.

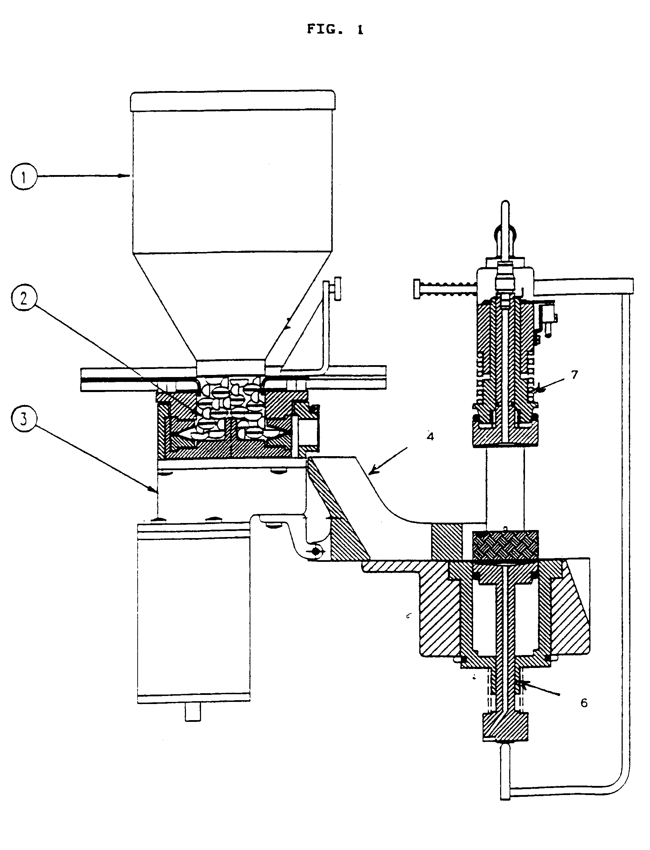

In Fig. 1 ist ein mit Kaffeebohnen gefüllter Ausgabetrichter mit dem Bezugszeichen 1 gekennzeichnet. Eine darunter horizontal verschiebbare Baugruppe weist eine Kaffeemühle 3, deren Mahlkammer 2 und eine Einfüllrutsche 4 auf. In der Ausgangsstellung der Baugruppe 2, 3, 4 mündet die Austrittsöffnung an der Unterseite des Ausgabetrichters 1 in die obere Einfüllöffnung der Mahlkammer 2, sodaß Kaffeebohnen aus dem Ausgabetrichter 1 in die Mahlkammer 2 gelangen können. Die seitliche Austrittsöffnung der Mahlkammer 2 mündet in das obere Ende der Einfüllrutsche 4.

Horizontal versetzt zu dem unteren Ende der Einfüllrutsche 4 ist die Einfüllöffnung einer Aufgußkammer 5 angeordnet. In der Aufgußkammer 5 ist ein Filtrierkolben 6 vertikal verschiebbar geführt. In Fig. 1 liegt auf der Oberfläche des ausgefahrenen Filtrierkolbens 6 eine Pastille, die aus dem zusammengepreßten und ausgelaugten Kaffeesatz des vorangegangenen Kaffeezubereitungs-Zyklusses besteht.

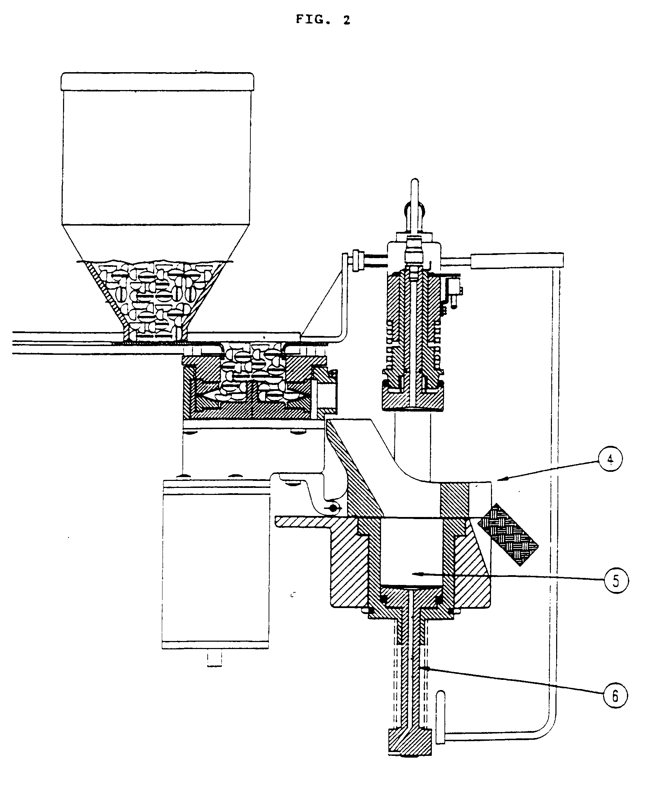

Auf Anforderung durch den Benutzer der Kaffeemaschine wird die Baugruppe 2, 3, 4 in die in Fig. 2 dargestellte Endstellung horizontal verfahren.

Beim Verschieben der Baugruppe 2, 3, 4 in die Endstellung wird die Pastille von einer in Verschieberichtung vorne angeordneten, als Schieber ausgebildeten Außenwand der Einfüllrutsche 4 von der Oberfläche des Filtrierkolbens 6 heruntergeschoben. Wenn die Baugruppe 2, 3, 4 in der Endstellung ist, wird der Filtrierkolben 6 freigegeben. Er fällt bis zu einem unteren Anschlagpunkt, gibt den Zugang von oben zu der Aufgußkammer 5 frei und bildet den Boden der Aufgußkammer 5.

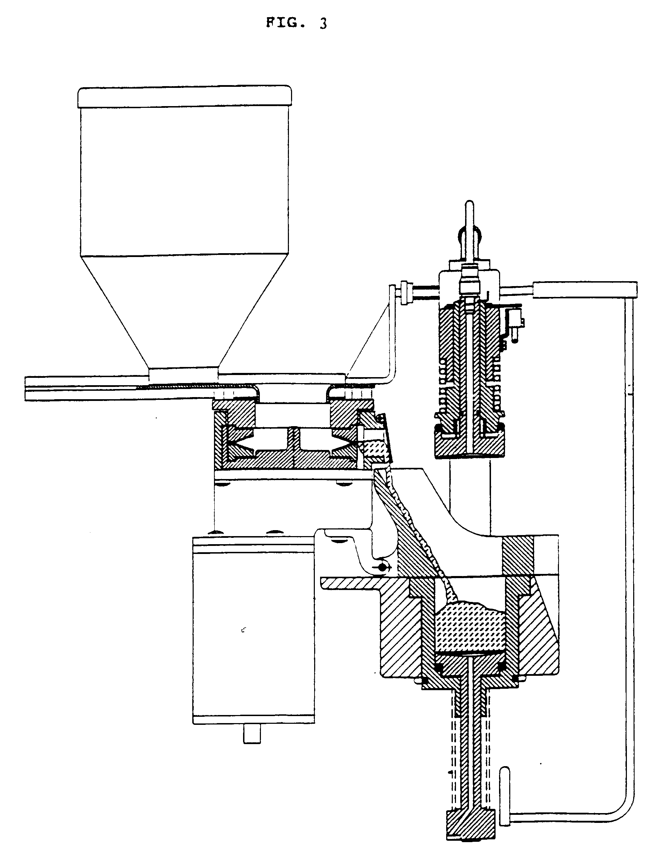

Anschließend wird Kaffeepulver in die Aufgußkammer 5 gefüllt (siehe Fig. 3). Dazu ist die Kaffeemühle 3 so lange in Betrieb, bis die in der Mahlkammer 2 enthaltenen Kaffeebohnen vollständig gemahlen sind.

Das Kaffeepulver fließt über die Einfüllrutsche 4 von oben durch die Einfüllöffnung in die Aufgußkammer 5.

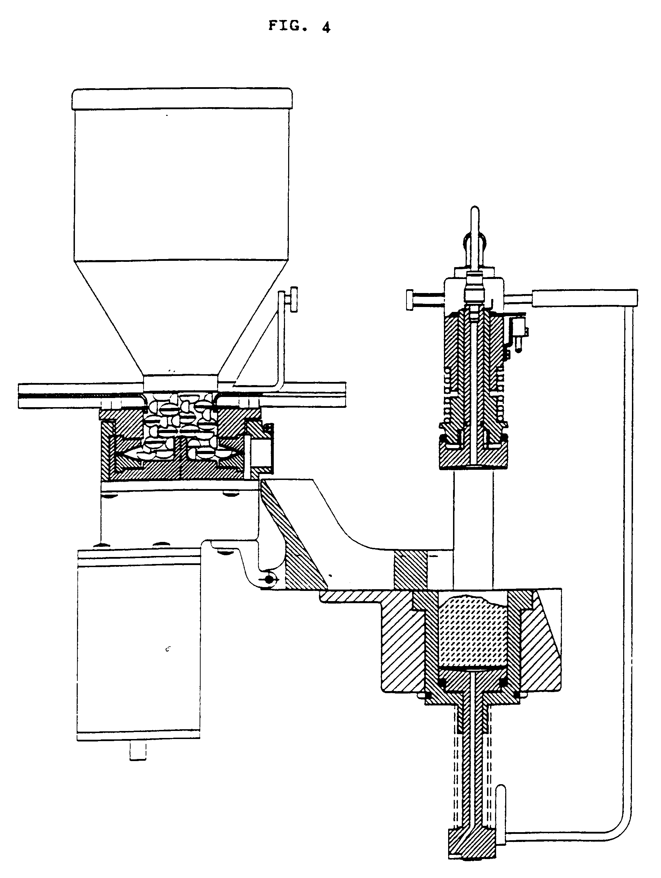

Dann wird die Baugruppe 2, 3, 4 wieder in die Ausgangsstellung verfahren (siehe Fig. 4), und die Mahlkammer 2 wird erneut mit Kaffeebohnen aus dem Ausgabetrichter 1 für den nächsten Kaffeezubereitungs-Zyklus gefüllt. Währenddessen wird in der Aufgußkammer 5 das Kaffeegetränk zubereitet. Dazu wird das Kaffeepulver in der Aufgußkammer 5 zwischen den Filtrierkolben 6 und einen die Aufgußkammer 5 von oben begrenzenden Aufgußkolben 7 gepreßt. Zum Aufbrühen des Kaffeegetränkes wird kochendes Wasser durch das zusammengepreßte Kaffeepulver geleitet, und das fertige Kaffeegetränk fließt aus der Aufgußkammer 5 in ein außerhalb der Kaffeemaschine angeordnetes Trinkgefäß (nicht dargestellt).

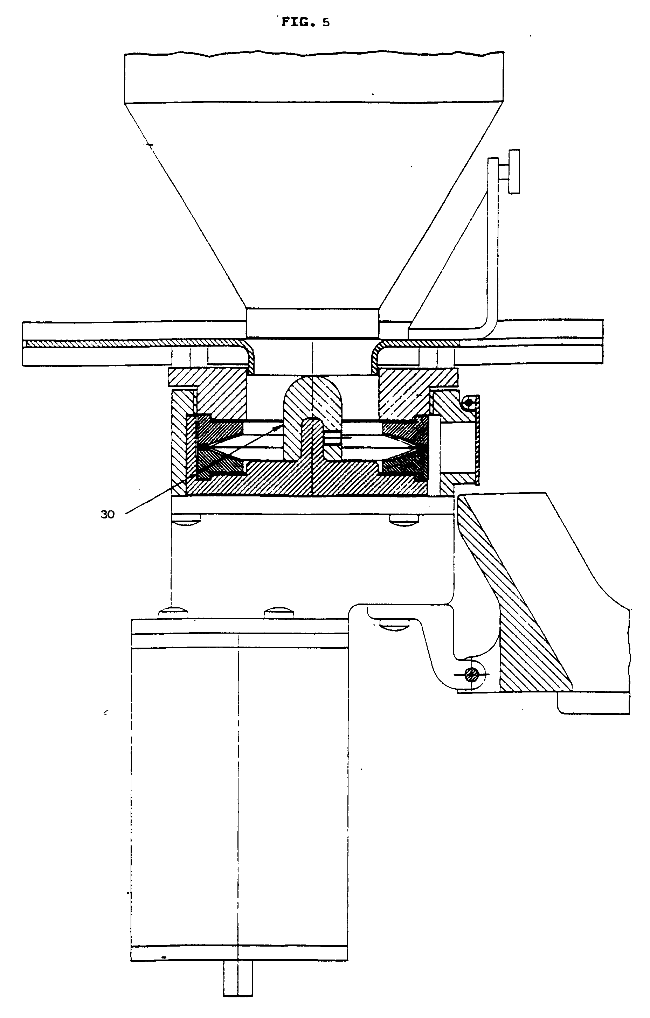

In Fig. 5 ist die Mahlkammer 2 vergrößert dargestellt. Auf einen zentral auf dem Boden der Mahlkammer 2 ausgebildeten Stift ist ein Verkleinerungsstück 30 aufgesteckt, welches den nutzbaren Rauminhalt der Mahlkammer 2 verkleinert. Dadurch kann die Menge der in der Mahlkammer 2 enthaltenen, zu mahlenden Kaffeebohnen und damit die Menge des gemahlenen Kaffeepulvers je Zubereitungs-Zyklus, d.h. die Stärke des Kaffeegetränkes, verringert werden. Durch verschiedene Verkleinerungsstücke 30 mit unterschiedlichen Volumina kann die Stärke des Kaffeegetränkes beliebig variiert werden.

## Patentansprüche

1. Automatische Kaffeemaschine zur Zubereitung eines Kaffeegetränkes, in der Kaffeebohnen aus einem Ausgabetrichter (1) in der Mahlkammer (2) einer Kaffeemühle (3) zu Kaffeepulver gemahlen werden, das Kaffeepulver dann über eine Einfüllrutsche (4) in eine Aufgußkammer (5) gelangt, wo es von einem Filtrierkolben (6) und einem Aufgußkolben (7) zusammengepreßt wird, und aus welcher das Kaffeegetränk allein oder als Cappuccino zusammen mit Milch ausfließt,
**dadurch gekennzeichnet,** daß die Kaffeemühle (3), deren Mahlkammer (2) und die Einfüllrutsche (4) eine Baugruppe (2, 3, 4) bilden und daß diese Baugruppe zwischen einer Ausgangsstellung, in welcher die Kaffeebohnen aus dem Ausgabetrichter (1) in die Mahlkammer (2) gelangen, und einer Endstellung, in welcher das Kaffeepulver aus der Mahlkammer (2) über die Einfüllrutsche (4) in die Aufgußkammer (5) gelangt, verschiebbar und zwar vorzugsweise horizontal verschiebbar ist.

2. Automatische Kaffeemaschine nach Anspruch 1, dadurch gekennzeichnet, daß die Kaffeemühle (3) in der Endstellung der Baugruppe (2, 3, 4) so lange in Betrieb ist, bis die in der Mahlkammer (2) enthaltenen Kaffeebohnen vollständig gemahlen sind und das Kaffeepulver in die Aufgußkammer (5) gelangt ist.

3. Automatische Kaffeemaschine nach Anspruch 1 oder 2, dadurch gekennzeichnet, daß ein Verschieben der Baugruppe (2, 3, 4) in die Endstellung die Freigabe des Filtrierkolbens (6) bewirkt, der dann bis zu einem unteren Anschlagpunkt fällt.

4. Automatische Kaffeemaschine nach einem der Ansprüche 1 bis 3, dadurch gekennzeichnet, daß ein Verschieben der Baugruppe (2, 3, 4) in die Endstellung den Auswurf einer Pastille bewirkt, die aus zusammengepreßtem und ausgelaugtem Kaffeesatz besteht.

5. Automatische Kaffeemaschine nach einem der Ansprüche 1 bis 4, dadurch gekennzeichnet, daß die Menge der zu mahlenden Kaffeebohnen durch ein in die Mahlkammer (2) einsteckbares Verkleinerungsstück (30), welches den nutzbaren Rauminhalt der Mahlkammer (2) verkleinert, verringert wird.

## Claims

1. Automatic coffee machine for preparing a coffee drink, in which machine coffee beans from a discharge funnel (1) are ground, in the grinding chamber (2) of a coffee mill (3), to give coffee powder, and the coffee powder then passes, via a filling slide (4) into an infusion chamber (5), where it is compressed by a filtering piston (6) and an infusion-chamber piston (7), the coffee drink flowing out of said infusion chamber on its own or together with milk as cappuccino, characterized in that the coffee mill (3), the grinding chamber (2) of the latter and the filling slide (4) form a subassembly (2, 3, 4) and in that this subassembly can be displaced, to be precise preferably in a horizontal direction, between an initial position, in which the coffee beans pass out of the discharge funnel (1) into the grinding chamber (2), and an end position, in which the coffee powder passes out of the grinding chamber (2), via the filling slide (4), into the infusion chamber (5).

2. Automatic coffee machine according to Claim 1, characterized in that, in the end position of the subassembly (2, 3, 4), the coffee mill (3) operates until such time as the coffee beans contained in the grinding chamber (2) are ground completely and the coffee powder has passed into the infusion chamber (5).

3. Automatic coffee machine according to Claim 1 or 2, characterized in that displacement of the subassembly (2, 3, 4) into the end position has the effect of releasing the filtering piston (6), which then drops to a bottom stop point.

4. Automatic coffee machine according to one of Claims 1 to 3, characterized in that displacement of the subassembly (2, 3, 4) into the end position has the effect of ejecting a tablet comprising compressed and used-up coffee grounds.

5. Automatic coffee machine according to one of Claims 1 to 4, characterized in that the quantity of coffee beans which are to be ground is decreased by a reduction element (30) which can be inserted into the grinding chamber (2) and reduces the useful capacity of the grinding chamber (2).

## Revendications

1. Cafetière automatique pour préparer une boisson à base de café dans laquelle les grains de café provenant d'un entonnoir de distribution (1) sont moulus dans la chambre de mouture (2) d'un moulin à café (3) pour en faire du café moulu, le café moulu parvenant ensuite par une goulotte de remplissage (4) dans un compartiment d'infusion (5) où il est comprimé par un piston de filtrage (6) et un piston d'infusion (7) et à partir duquel la boisson à base de café s'écoule seule ou en capuccino ensemble avec du lait, caractérisé en ce que le moulin à café (3) dont la chambre de mouture (2) et la goulotte de remplissage (4) constituent un ensemble d'éléments (2, 3, 4) et en ce que cet ensemble peut être déplacé entre une position initiale dans laquelle les grains de café parviennent de l'entonnoir de distribution (1) dans la chambre de mouture (2) et une position finale dans laquelle le café moulu parvient dans la chambre d'infusion (5) depuis la chambre de mouture (2) en passant par la goulotte de remplissage (4) et ceci de préférence horizontalement.

2. Cafetière automatique selon la revendication 1, caractérisée en ce que le moulin à café (3) reste en fonctionnement dans la position finale de l'ensemble d'éléments (2, 3, 4) tant que les grains de café contenus dans la chambre de mouture (2) ne sont pas complètement moulus et tant que le café moulu n'est pas parvenu dans la chambre d'infusion (5).

3. Cafetière automatique selon la revendication 1 ou 2, caractérisée en ce qu'un déplacement de l'ensemble d'éléments (2, 3, 4) dans la position finale provoque la libération du piston de filtrage (6) qui tombe ensuite jusqu'à un point de butée inférieur.

4. Cafetière automatique selon l'une des revendications 1 à 3, caractérisée en ce qu'un déplacement de l'ensemble d'éléments (2, 3, 4) dans la position finale provoque l'éjection d'une pastille composée de marc de café et extrait.

5. Cafetière automatique selon l'une des revendications 1 à 4, caractérisée en ce que la quantité de grains de café à moudre est réduite par un élément réducteur enfichable (30) dans la chambre de mouture (2), lequel diminue la contenance utile de la chambre de mouture (2).
